# FASCICULE DE BREVET EUROPEEN

(11) **EP 0 742 515 B1**
(45) Date de publication et mention de la délivrance du brevet: **17.06.1998**
(21) Numéro de dépôt: 96400911.2
(22) Date de dépôt: 26.04.1996
(51) Int. Cl.: G06F 9/445, G06F 15/78, G06F 7/00

(54) **Procédé de mise en service d'un circuit intégré**
Verfahren zur Inbetriebnahme einer Halbleiterschaltung
Method for putting into operation an integrated circuit

(30) Priorité: 28.04.1995 FR 9505176
(43) Date de publication de la demande: 13.11.1996
(73) Titulaire: SGS-THOMSON MICROELECTRONICS S.A., 94250 Gentilly (FR)
(72) Inventeur: Le Van Suu, Maurice, 93230 Romainville (FR)
(74) Mandataire: Schmit, Christian Norbert Marie

(56) Documents cités:
- EP-A- 0 455 345
- EP-A- 0 498 454
- DE-A- 4 225 758
- US-A- 5 361 371
- ELECTRONIC ENGINEERING, vol. 65, no. 795, 1 Mars 1993, page 83 XP000355994 "COMBINING FUZZY HARD-WARE WITH THE ARM CORE"

## Description

L'invention a pour objet un procédé de mise en service d'un circuit intégré qui comporte un processeur logique, une mémoire programme de ce processeur logique, et un coprocesseur de logique floue.

Un tel circuit intégré présente, pour pouvoir être réalisé, des contraintes liées à la structure des mémoires programmes du processeur et du coprocesseur de logique floue. Actuellement, un système comportant un tel processeur et un tel coprocesseur n'est pas réalisé sous la forme d'un seul circuit intégré. Il s'agit, pour obtenir un système équivalent d'agencer et d'organiser entre eux le fonctionnement de plusieurs circuits différents. On peut penser qu'il suffit, pour obtenir un circuit intégré unique, d'intégrer (de réaliser ensemble) ces deux circuits sur un seul circuit intégré monolithique. Ceci n'est pas en pratique possible compte tenu de structures de mémoires différentes, selon qu'il s'agit d'un coprocesseur de logique floue dont on dispose déjà des plans et des masques de fabrication, et d'un processeur logique pour lequel on possède les mêmes éléments. La réunion de deux tels circuits devient impossible à faible coût : le circuit intégré fabriqué deviendrait trop gros, peu facilement réalisable. En effet les contraintes technologiques de fabrication vont influencer le rendement de production et la testabilité du circuit en final.

Une solution consisterait à refondre en totalité les caractéristiques d'un processeur de type connu avec les caractéristiques d'un processeur de logique floue de type connu. Cependant cette démarche, qui revient à redéfinir un nouveau processeur entier est bien trop longue et trop coûteuse à mettre en oeuvre. Dans une demande de brevet EP-A-0 742 516, déposée le même jour par le même demandeur il a été prévu, pour résoudre ce problème, de munir le processeur de logique floue d'une mémoire à accès aléatoire volatile. Dans une phase de démarrage du circuit intégré, lors de la mise sous tension on provoque le chargement de la mémoire volatile avec le contenu d'une partie de la mémoire programme du processeur logique. Ce faisant on résout les problèmes d'architecture et de conception évoqués ci-dessus.

Cependant un tel système n'est utilisable que si on connaît à priori les instructions à mettre en mémoire de la mémoire programme du processeur de logique floue. Une telle situation est par exemple le cas lorsqu'il s'agit de produire en grande série un appareil (par exemple une hotte aspirante) muni pour le faire marcher d'un circuit intégré étudié à cet effet. Cependant il existe des cas où la connaissance à priori des instructions à charger dans la mémoire programme du processeur de logique floue, soit n'est pas avérée, soit doit être par la suite remise en question.

Elle n'est pas avérée pendant des phases de mise au point, lors des tests pour vérifier qu'une installation va fonctionner comme on le souhaitait. Une telle mise au point nécessite le montage de l'installation, (par exemple une installation de chauffage dans un immeuble) la mise en place de circuits intégrés de gestion de ces appareils et le test du bon fonctionnement de l'installation dans toutes les situations.

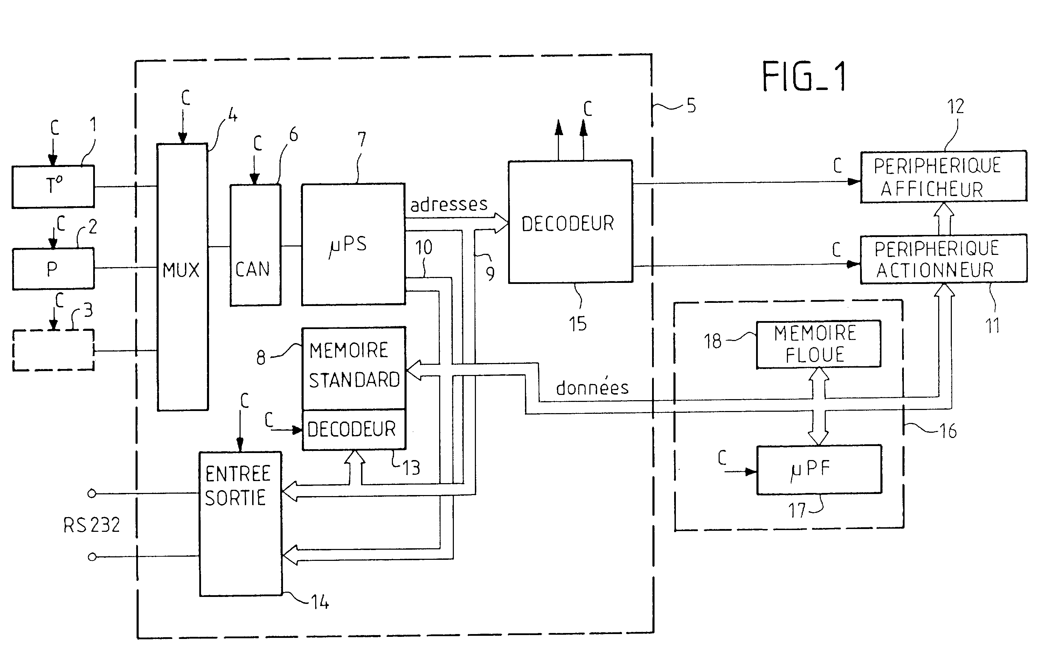

La figure 1 représente par exemple schématiquement une telle installation. Un ensemble de capteurs 1 à 3 mesurant par exemple la température T° ou la pression P délivrent des signaux de mesure. Ces signaux de mesure sont acheminés vers un multiplexeur 4 d'un circuit intégré électronique 5. Le multiplexeur 4 est en relation avec un convertisseur analogique numérique 6 lui même en relation avec un processeur de traitement 7. Le processeur de traitement 7 reçoit les informations et les traite en fonction d'un programme contenu dans une mémoire programme 8 à laquelle il est relié par un bus d'adresse 9 et un bus de donnée 10. Ces données sont ensuite exploitées soit à titre de commande pour être appliquées à un organe périphérique actionneur 11 soit telles quelles pour être affichées sur un dispositif d'affichage 12 de l'installation. Le périphérique actionneur 11 est par exemple une commande d'une vanne. Le processeur 7 gère tous ces organes, notamment un décodeur 13 de la mémoire 8 et un dispositif 14 d'entrée sortie du circuit intégré 5 à l'aide d'un décodeur de commande 15 qui produit des commandes C appliquées à ces organes périphériques externes ainsi qu'aux circuits internes 4, 6, 13, 14.

Lorsque le traitement des données en provenance des capteurs est lourd, compte tenu de la complexité du phénomène à gérer par l'installation, on utilise d'une manière connue un circuit intégré 16 comportant un processeur 17 de logique floue. Le processeur de logique floue 17 est en relation avec sa mémoire programme 18 qui contient des règles en vertu desquelles les données doivent être traitées. Le fonctionnement d'un tel circuit 16 est connu en soi. Le circuit 16 reçoit d'une manière naturelle les données par le bus de donnée 10 et une commande d'exécution C délivrée par le décodeur 15. Pour exécuter le traitement le processeur 17 possède un fonctionnement propre lié au programme enregistré d'une manière non volatile dans sa mémoire 18. L'ensemble des circuits intégrés 5 et 16 est installé sur les appareils de l'installation et est connecté à une unité centrale par l'intermédiaire du circuit d'entrée sortie 14 qui permet d'échanger avec les autres organes de l'installation des informations par le biais d'une voie de transmission, ici représenté par uniquement deux fils et fonctionnant selon un protocole de type série RS232 (de type ASCII par exemple). Une liaison par courant porteur, ou autre, utilisant ce même type de protocole est aussi envisageable.

Lors de la mise au point d'un tel système, par exemple lorsque l'un des capteurs 1 à 3 est changé, que sa dynamique est différente de celle qui était prévue à l'origine, il est nécessaire de changer le contenu de la mémoire 18. Ceci implique des allers retours compliqués entre chaque appareil où est installé le système de la figure 1 et le site central où on disposera des moyens pour en modifier le contenu. Une telle démarche n'est pas pratique à mettre en oeuvre et c'est un but de l'invention que de résoudre ce problème. Il est connu par ailleurs, par le document EP-A-0 364 743, de modifier sur site, au moment du développement, le contenu d'une mémoire séparée. A l'issue le contenu de cette mémoire est incorporé dans une mémoire non programmable du circuit intégré. Cette démarche présente l'inconvénient que le circuit ne peut plus être modifié pour, ultérieurement, tenir compte d'une altération, d'un vieillissement par exemple.

Dans l'invention pour le résoudre on prévoit de remplacer la mémoire 18 par une mémoire de préférence volatile mais essentiellement de type effaçable et programmable électriquement (EEPROM), et surtout de provoquer le chargement de son programme par l'intermédiaire du circuit d'entrée sortie 14. Dans l'invention ce chargement est alors effectué sous le contrôle du processeur principal 7 qui va gérer le circuit d'entrée sortie 14 et qui provoquera avec ses bus d'adresses et de données le chargement de la mémoire volatile qui remplacera la mémoire 18. Ainsi, d'une manière complémentaire à l'esprit de la demande de brevet déposée le même jour citée ci-dessus, on pourra provoquer le téléchargement dans la mémoire d'une partie du programme stocké dans la mémoire 8 ou bien, selon la présente invention, le stockage dans cette mémoire d'informations disponibles au fur et à mesure sur le circuit d'entrée sortie 14.

L'invention sera mieux comprise à la lecture de la description qui suit à l'examen des figures qui l'accompagnent. Celles-ci ne sont données qu'à titre indicatif et nullement limitatif de l'invention. Les figures montrent :
- figure 1 : une représentation déjà commentée d'un système de l'état de la technique ;
- figure 2 : une représentation schématique d'un circuit utilisable pour mettre en oeuvre le procédé de l'invention ;
- figure 3 : une représentation d'un système de séquencement permettant le chargement de la mémoire de travail du processeur 17.

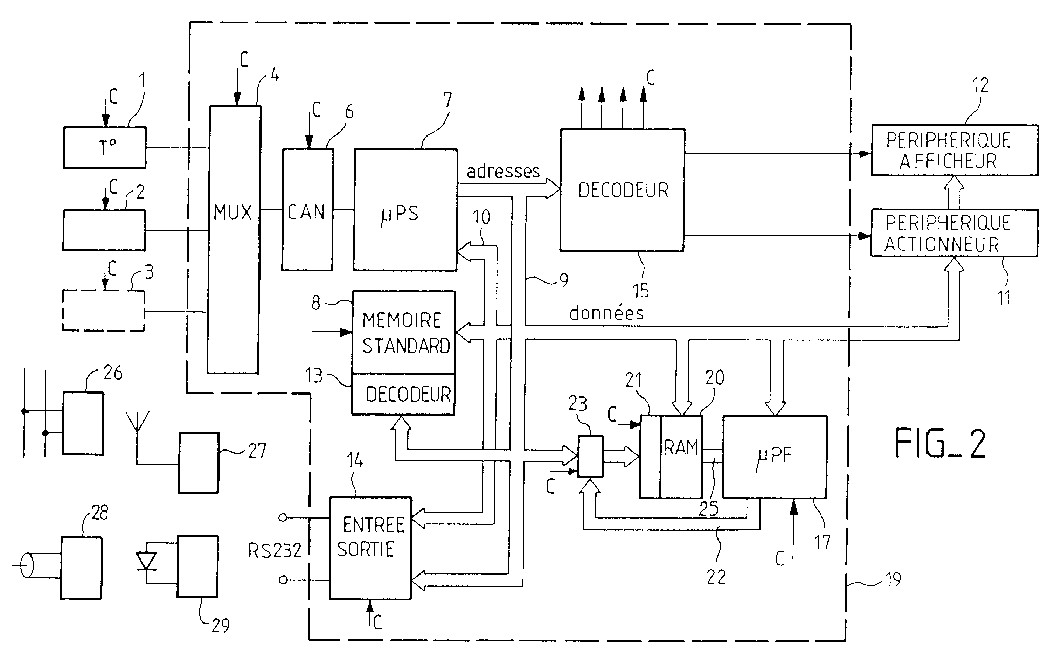

La figure 2 montre un dispositif utilisable pour mettre en oeuvre le procédé de l'invention. Ce dispositif comporte essentiellement un circuit intégré monolithique 19 avec les mêmes éléments, portant des mêmes numéros, que ceux de la figure 1. On constate seulement que la mémoire floue non volatile 18 a été remplacée par une mémoire volatile 20 et que par ailleurs cette mémoire volatile 20 reçoit dans son décodeur d'adresse 21 le bus d'adresse 9 du processeur 7. On parlera dans la suite de cette description de mémoire volatile pour la mémoire 20, bien que celle-ci puisse être une mémoire essentiellement programmable effaçable électriquement, de type EEPROM ou même RAM sauvegardée par pile. En fait la mémoire 20 peut aussi être mise en relation directe avec le processeur 17 par l'intermédiaire de son bus d'adresse 22. Dans ce but le bus d'adresse 22 et le bus d'adresse 9 aboutissent sur un multiplexeur 23 qui reçoit par ailleurs les ordres C produits par le décodeur 15. Le multiplexeur 23 est reliée au décodeur 21.

Le fonctionnement de l'invention est le suivant. Quand on veut avec des signaux disponibles à l'extérieur modifier le contenu de la mémoire 20, on produit avec le processeur logique 7 un signal d'adresse, véhiculé par le bus 9, et transmis par le multiplexeur 23 au décodeur 21. Ce signal d'adresse permet de sélectionner un mot, ou un ensemble de mots mémoires de la mémoire 20 où on veut stocker une information nouvelle. On envoie par ailleurs, depuis l'extérieur du circuit intégré, sur le circuit d'entrée sortie 14 des signaux représentatifs des informations qu'on veut stocker à l'adresse sélectionnée dans la mémoire 20. En variante le circuit d'entrée sortie possède des moyens de mémorisation pour effectuer un chragement de la mémoire 20 en temps différé. Avec le décodeur 15, on produit alors un ensemble d'ordres C qui permettent d'une part de configurer le multiplexeur 23, et d'autre part de faire fonctionner le circuit 14 pour qu'il mette sur le bus de données 10 les informations qu'il reçoit en provenance du monde extérieur. Enfin les ordres C provoquent une écriture dans la mémoire 20, à l'endroit sélectionné, des informations disponibles sur le bus 10. Le cadencement de cette opération se produit sous le contrôle du processeur 7. Celui-ci d'une manière classique est capable de recevoir et de vérifier la teneur des messages reçus par le circuit d'entrée sortie 14 puis d'en effectuer le traitement: ici leur mémorisation dans la mémoire 20.

Sur la figure 2 on a représentée le microprocesseur 17 en relation avec sa mémoire 20 par l'intermédiaire d'un prolongement du bus de données 10. Cependant il est possible, pour certaines architectures de coprocesseur déjà existantes de retenir des types de liaison directes 25 entre ce processeur et sa mémoire programme.

Plutôt qu'une liaison de type RS232 on peut avoir affaire, au delà de cette liaison, à un circuit de couplage 26 qui permet de coupler le circuit 19 sur le réseau électrique de manière à utiliser les courants porteurs pour acheminer les informations. On peut également utiliser des modems 27 et 28 permettant respectivement des émissions radio électriques ou sur un câble coaxial. On peut également utiliser des capteurs optoélectroniques 29 pour émettre et recevoir des rayonnements infrarouges représentatifs des informations échangées par le circuit 19 avec le monde extérieur.

Le programme placé dans la mémoire 8 du processeur 7 comporte donc un jeu d'instructions à utiliser pour faire fonctionner le processeur 7 comme organe de programmation de la mémoire 20. Une fois que la programmation de cette mémoire est accomplie avec le processeur 7, on envoie des ordres dans le décodeur 15 qui permettent au multiplexeur 23 de basculer de manière à permettre ensuite la relation normale entre la mémoire 20 et le processeur 17 par l'intermédiaire du bus 22.

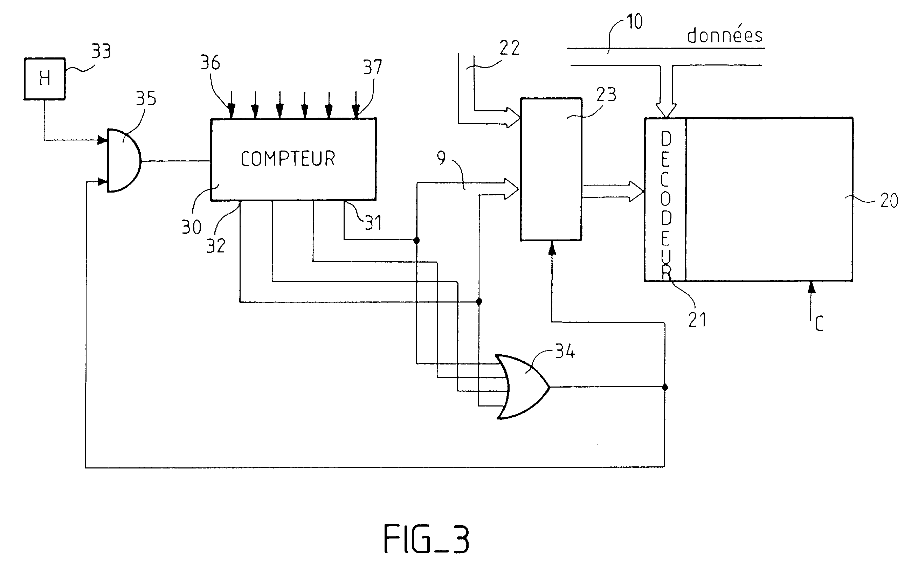

La figure 3 montre, dans un exemple, le moyen de réaliser l'opération de programmation de la mémoire 20. Le microprocesseur 7 peut par exemple comporter un compteur 30 mis dans un état de comptage dépendant du nombre de mots mémoires à enregistrer dans la mémoire 20. Ce compteur, par ses fils de sorties 31 à 32 délivre des états électriques qui sont appliqués via le multiplexeur 24 au décodeur 23. Ces états électrique constituent une adresse. A chaque impulsion de comptage d'une horloge 33, le compteur 30 change d'état produisant un état électrique suivant interprété par ailleurs par le décodeur 23 comme une nouvelle adresse. Selon l'architecture retenue l'horloge 33 sera produite par le processeur 7, ou, de préférence, elle sera un résultat du cadencement, résultant de la détection par le circuit d'entrée et sortie 14 des informations qui lui proviennent.

Par exemple, s'il s'agit d'enregistrer des mots de huit bits le circuit d'entrée sortie 14 comportera dans son circuit de synchronisation un diviseur par huit pour produire une impulsion tous les huit bits reçus (que ce soit des 1 ou des 0). De ce fait le compteur 30 du processeur 7 met sur le bus d'adresse 9 les adresses correspondant au stockage dans la mémoire 20. A chaque pas d'horloge 33 la mémoire 20 enregistre à l'adresse adéquate les données disponibles sur le bus 10. Dans ce but, à chaque pas d'horloge, elle reçoit un ordre d'écriture C.

Les sorties 31 à 32 du compteur sont par ailleurs reliées, d'une manière simplifiée, à une porte OU 34 dont l'état de sortie est toujours différent de zéro tant que l'adresse disponible sur les fils 31 à 32 n'est pas 00...00. Dès que cette adresse, finale, est produite par le compteur 30 la porte 34 bascule. Son signal de sortie est introduit, en commun avec le signal de comptage de l'horloge 33, sur les entrées d'une porte ET 35. Dès que l'état 00 ...00 est atteint le comptage s'arrête, même si par ailleurs l'horloge 33 continue à débiter des impulsions.

En variante l'ordre C de commutation du décodeur 24 peut être directement produit par la sortie de la porte 34 reliée à l'entrée de commande du multiplexeur 24.

La valeur initiale que l'on impose dans le compteur 30 peut être fixée par le processeur 7 qui vient appliquer des états électriques correspondants sur des entrées de forçage 36 à 37 du compteur 30 avant l'opération de chargement.

Lorsque les signaux servant à programmer la mémoire 20 proviennent des circuits 26 à 29 on utilisera de préférence, dans le circuit d'entrée sortie 14 des convertisseurs analogiques numériques pour produire des signaux binaires à partir de signaux qui sont normalement analogiques. Ceci sera particulièrement le cas lorsqu'il s'agira de filtrage ou de traitement de type dit delta-sigma pour récupérer des informations de transmission de type analogique et pour ainsi sécuriser une transmission d'information.

## Revendications

1. Procédé de mise en service d'un circuit intégré (19) qui comporte un processeur (7) logique, une mémoire (8) programme de ce processeur logique, et un coprocesseur (17) de logique floue, caractérisé en ce qu'il comporte les étapes suivantes:
- on produit (30) avec le processeur logique un signal d'adresse (31, 32) pour accéder (23) à une zone mémoire d'une mémoire (20) à accès aléatoire, en relation (22, 25) avec ce coprocesseur,
- on envoie, depuis l'extérieur (26, 29) du circuit intégré, des signaux à un circuit (14) d'entrée sortie de ce circuit intégré,
- on fait apparaître sous le contrôle (C) du processeur logique, sur un bus de données (10) en relation avec cette mémoire (20) à accès aléatoire, des états électriques correspondant aux signaux envoyés,
- on produit avec le processeur logique un signal de commande (C) pour mémoriser, dans la zone mémoire de cette mémoire à accès aléatoire à laquelle on a accédé, des informations représentatives d'instructions de ce coprocesseur et correspondant à ces états électriques.

2. Procédé selon la revendication 1, caractérisé en ce que
- on produit le signal d'adresse avec un compteur (30) décompteur piloté par une horloge.

3. Procédé selon la revendication 2, caractérisé en ce que
- on configure (36, 37) le compteur décompteur avec une valeur initiale avant d'effectuer son décomptage.

4. Procédé selon l'une des revendications 1 à 3, caractérisé en ce que
- on relie le bus de données (10) relié à la mémoire à accès aléatoire à un circuit (14) d'entrée sortie de données du processeur logique.

5. Procédé selon l'une des revendications 1 à 4, caractérisé en ce que
- on munit le circuit d'entrée sortie du circuit intégré d'un circuit (14) de connexion à un réseau de transmission.

6. Procédé selon la revendication 5, caractérisé en ce que
- on munit le circuit d'entrée sortie de circuits de conversion analogique numérique et numérique analogique.

7. Procédé selon l'une des revendications 1 à 6, caractérisé en ce que
- on fait fonctionner le circuit d'entrée sortie du circuit intégré selon un protocole de type RS232.

## Patentansprüche

1. Verfahren zur Inbetriebnahme eines integrierten Schaltkreises (19), der einen logischen Prozessor (7) aufweist, einen Programmspeicher (8) des logischen Prozessors und einen Coprozessor (17) mit unscharfer Logik (Fuzzy Logik), gekennzeichnet, durch folgende Schritte:
- Erzeugung (30) eines Adressensignals (31, 32) mit dem logischen Prozessor, um auf eine Speicherzone eines Speichers (20) mit direktem Zugriff (23) in Verbindung (22, 25) mit dem Coprozessor zuzugreifen,
- Abschicken von Signalen zu einem Eingangs/Ausgangs-Schaltkreis (14) des integrierten Schaltkreises von außerhalb (26, 29) des integrierten Schaltkreises,
- Darstellen von den abgeschickten Signalen entsprechenden elektrischen Zuständen unter der Kontrolle (C) des logischen Prozessors auf einem Datenbus (10), der mit dem Speicher (20) mit direktem Zugriff verbunden ist,
- Erzeugung eines Befehlssignals (C) mit dem logischen Prozessor, um in der Speicherzone des Speichers mit direktem Zugriff, auf die man zugreift, Informationen zu speichern, die Anordnungen des Coprozessors darstellen und den elektrischen Zuständen entsprechen.

2. Verfahren nach Anspruch 1, dadurch gekennzeichnet, daß ein Adressensignal mit einem zwischenzählenden Zähler (30) erzeugt wird, der durch einen Taktgeber gesteuert wird.

3. Verfahren nach Anspruch 2, dadurch gekennzeichnet, daß der zwischenzählende Zähler mit einem Startwert konfiguriert wird (36, 37), bevor seine Zwischenzählung ausgeführt wird.

4. Verfahren nach einem der vorhergehenden Ansprüche 1 bis 3, dadurch gekennzeichnet, daß
der Datenbus (10), der mit dem Speicher mit direktem Zugriff verbunden ist, an einen Eingangs/Ausgangs-Schaltkreis (14) von Daten des logischen Prozessors verbunden wird.

5. Verfahren nach einem der Ansprüche 1 bis 4, dadurch gekennzeichnet, daß
der Eingangs/Ausgangs-Schaltkreis des integrierten Schaltkreises mit einem Verbindungsschaltkreis (14) an ein Übertragungsnetz ausgestattet wird.

6. Verfahren nach Anspruch 5, dadurch gekennzeichnet, daß der Eingangs/Ausgangs-Schaltkreis mit Analog-Digital- und Digital-Analog-Wandlern ausgestattet ist.

7. Verfahren nach einem der Ansprüche 1 bis 6, dadurch gekennzeichnet, daß
der Eingangs/Ausgangs-Schaltkreis des integrierten Schaltkreises mit einem Protokoll vom Typ RS232 arbeitet.

## Claims

1. Method for bringing into service an integrated circuit (19) which has a logic processor (7), a program memory (8) of this logic processor, and a fuzzy logic coprocessor (17), characterised in that it includes the following steps:
- an address signal (31, 32) is produced (30) with the logic processor in order to gain access (23) to a memory area of a random access memory (20), connected to (22, 25) this coprocessor,
- signals are sent, from outside (26, 29) the integrated circuit, to an input/output circuit (14) of this integrated circuit,
- electrical states corresponding to the signals sent are caused to appear, under the control (C) of the logic processor, on a data bus (10) connected to the random access memory (20),
- a control signal (C) is produced with the logic processor in order to store, in the memory area of this random access memory to which access has been gained, information representing instructions from this coprocessor and corresponding to these electrical states.

2. Method according to Claim 1, characterised in that
- the address signal is produced with a counter/down-counter (30) controlled by a clock.

3. Method according to Claim 2, characterised in that
- the counter/down-counter is configured (36, 37) with an initial value before effecting its down-counting.

4. Method according to one of Claims 1 to 3, characterised in that
- the data bus (10) connected to the random access memory is connected to a data input/output circuit (14) of the logic processor.

5. Method according to one of Claims 1 to 4, characterised in that
- the input/output circuit of the integrated circuit is provided with a circuit (14) for connection to a transmission network.

6. Method according to Claim 5, characterised in that
- the input/output circuit is provided with analogue to digital and digital to analogue conversion circuits.

7. Method according to one of Claims 1 to 6, characterised in that
- the input/output circuit of the integrated circuit is made to operate according to a protocol of the RS232 type.
